# DEMANDE DE BREVET EUROPEEN

(11) **EP 1 911 624 A2**
(43) Date de publication de la demande: **16.04.2008**
(21) Numéro de dépôt: 07301439.1
(22) Date de dépôt: 08.10.2007
(51) Int. Cl.: B60N 2/30, B60N 2/36, E05D 7/10

(54) **Systeme de montage amovible d'un premier élément sur un second élément, notamment pour une assise arrière de véhicule automobile**

(30) Priorité: 10.10.2006 FR 0654177
(71) Demandeur: PEUGEOT CITROËN AUTOMOBILES S.A., 78140 Velizy Villacoublay (FR)
(72) Inventeur: Gremillet, Eric M., 70200 La Vergenne (FR)

(57) **Abrégé**

Ce système de montage (18) permet le basculement du premier élément par rapport au second élément.

Il comprend un palier (20), solidaire du second élément et muni d'un logement (25) de forme cylindrique présentant le long d'une génératrice une fente (26), et un axe d'articulation (22) solidaire du premier élément et muni de deux méplats (30) lui permettant de traverser ladite fente (26).

Il comprend également un coussinet (24) adapté pour se positionner dans ledit logement (25) et comportant un cylindre présentant une rainure diamétrale (34) adaptée pour recevoir l'axe d'articulation (22).

Application aux dispositifs de liaison amovible et basculante d'une assise arrière de véhicule automobile sur une embase solidaire du plancher de véhicule.

## Description

L'invention concerne un système de montage amovible d'un premier élément sur un second élément, du type dans lequel le système de montage permet le basculement du premier élément par rapport au second élément, le système de montage comprenant un palier solidaire du second élément et muni d'un logement de forme cylindrique présentant le long d'une génératrice une fente, et un axe d'articulation solidaire du premier élément et muni de deux méplats lui permettant de traverser ladite fente.

Dans de nombreuses applications industrielles, un élément doit pouvoir être monté amovible sur un élément support, par un système de montage autorisant des mouvements relatifs de basculement de l'élément et du support.

Il en est particulièrement ainsi dans l'industrie automobile, où depuis quelques années les constructeurs de véhicules automobiles offrent à leur clientèle la possibilité d'augmenter le volume disponible de rangement dans le coffre, par une combinaison de mouvements du dossier et de l'assise comprenant un relèvement par basculement de l'assise des sièges ou de la banquette arrière. De plus, un dispositif permet d'extraire l'assise ainsi relevée.

Le document US-2,612,211 divulgue un dispositif qui permet de relier de manière amovible et basculante une assise de siège à l'armature du siège.

Cependant, l'usure de ce dispositif est rapide du fait des faibles surfaces de contact entre les deux éléments.

L'invention a pour but de proposer un système de montage, notamment d'une assise arrière de véhicule automobile sur une embase solidaire du plancher du véhicule, plus robuste, simple d'utilisation et facile à réaliser.

A cet effet, l'invention a pour objet un système de montage amovible d'un premier élément sur un second élément, du type précité, caractérisé en ce qu'il comprend un coussinet adapté pour se positionner dans ledit logement et comportant un cylindre présentant une rainure diamétrale adaptée pour recevoir l'axe d'articulation.

Le système de montage selon l'invention peut comporter une ou plusieurs des caractéristiques suivantes :
- le coussinet comprend un flasque de butée adapté pour buter contre une face latérale dudit palier;
- l'axe d'articulation comprend un flasque de butée adapté pour coopérer avec le flasque dudit coussinet, et un flasque de butée adapté pour buter contre une face latérale dudit palier pour positionner longitudinalement l'axe d'articulation;
- les flasques de butée de l'axe d'articulation et du coussinet sont coaxiaux lorsque l'axe est inséré dans le coussinet;
- lesdits flasques de butée ont le même diamètre;
- le palier est rapporté sur le second élément;
- le premier élément est une assise arrière de véhicule automobile et le second élément est une embase solidaire du plancher dudit véhicule ;
- la fente dudit logement est ouverte vers le haut; et
- l'assise comporte un axe d'articulation de chaque côté, chaque axe d'articulation étant associé à un palier solidaire du plancher du véhicule.

L'invention a également pour objet un véhicule automobile, caractérisé en ce qu'il comprend un système de montage d'une assise arrière tel que décrit précédemment.

L'invention sera mieux comprise à la lecture de la description qui va suivre, donnée uniquement à titre d'exemple et faite en se référant aux dessins annexés, dans lesquels :
- la Figure 1 est une vue en perspective d'un siège arrière de véhicule automobile dont l'assise est en position rabattue ;
- la Figure 2 est une vue analogue à la Figure 1 avec l'assise en position relevée ;
- la Figure 3 est une vue en perspective éclatée d'un système de montage selon l'invention;
- la Figure 4 est une vue en perspective du système de la Figure 3 à l'état assemblé;
- la Figure 5 est une vue en coupe transversale selon le plan V de la Figure 4 représentant le système de montage lorsque l'assise est en position relevée ; et
- la Figure 6 est une vue analogue à la Figure 5 représentant le système de montage lorsque l'assise est en position rabattue.

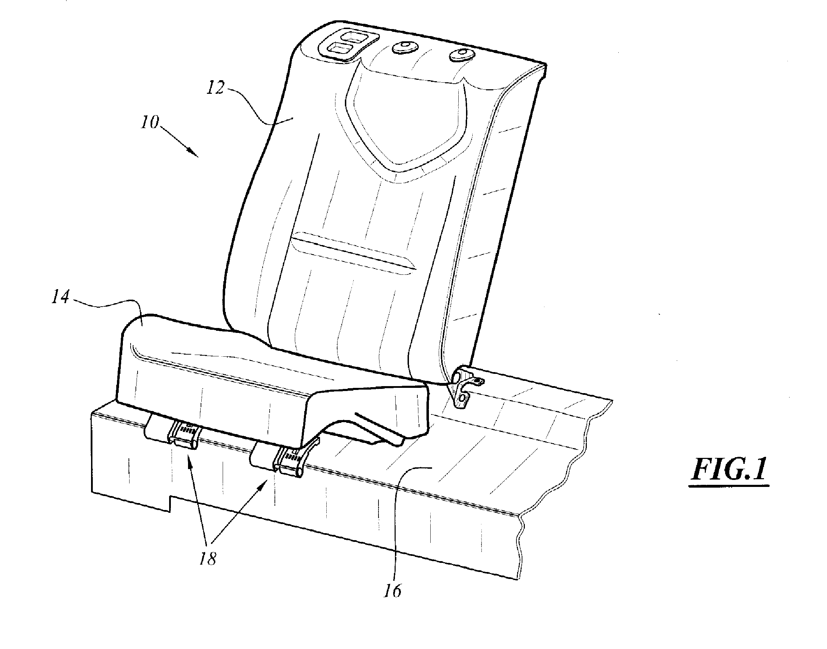

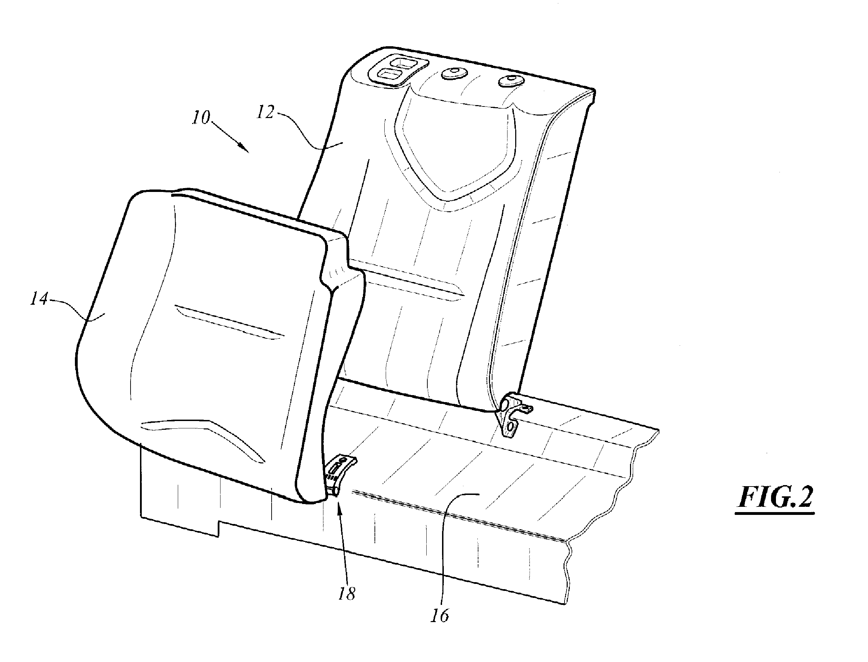

Les Figures 1 et 2 représentent un siège arrière 10 de véhicule automobile comportant un dossier 12 et une assise arrière 14.

Dans ce qui suit, les orientations indiquées telles que « avant », « arrière », « longitudinal », « transversal », correspondent à celles du véhicule.

L'assise arrière 14 est montée relevable et amovible sur une embase 16 solidaire du plancher du véhicule (non représenté). Ce montage est réalisé au moyen de deux systèmes de montage latéraux 18 qui permettent le basculement de l'assise de l'une à l'autre des deux positions des Figures 1 et 2. Ces deux positions sont respectivement une position rabattue pour recevoir un passager, et une position relevée. Cette dernière permet d'augmenter le volume disponible de rangement dans le coffre après rabattement subséquent du dossier 12 vers l'avant.

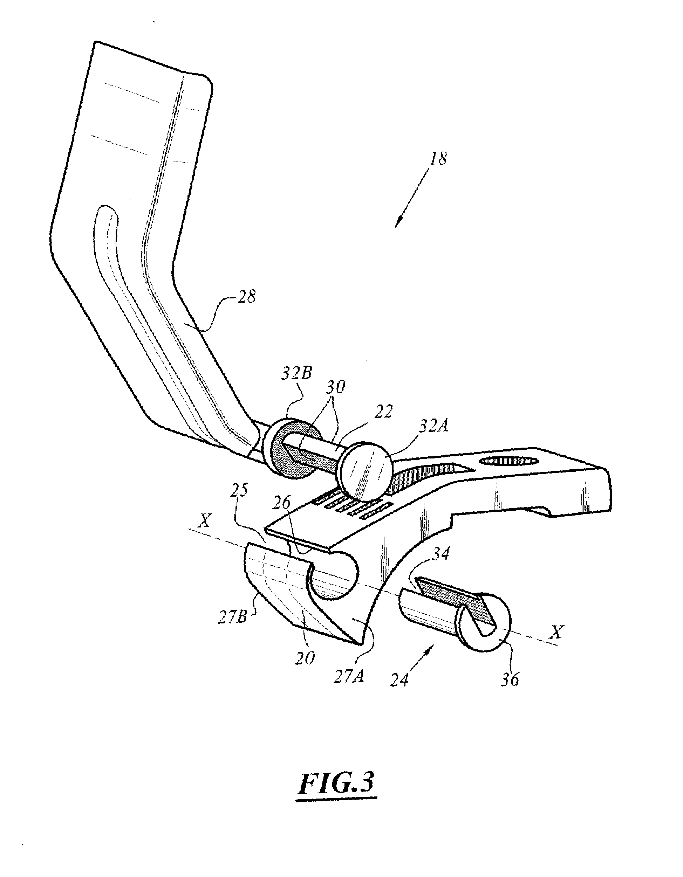

En référence à la Figure 3, chaque système de montage 18 comprend un palier 20, un axe d'articulation 22 et un coussinet 24.

Le palier 20 est rapporté sur l'embase 16 par soudure, vissage ou tout autre moyen, et est muni d'un logement 25 de forme cylindrique à axe X-X transversal qui présente le long d'une génératrice supérieure une fente 26 ouverte vers le haut. Le logement 25 débouche sur deux faces latérales 27A et 27B, planes et parallèles, du palier 20.

L'axe d'articulation 22 est solidaire de l'assise 14 au moyen d'une armature 28 fixée à l'assise, et est muni de deux méplats parallèles 30. La distance séparant les méplats 30 est légèrement inférieure à la largeur de la fente 26 du logement 25. L'axe 22 est par ailleurs muni de deux flasques de butée 32A et 32B, le flasque 32B étant adapté pour coopérer directement avec la face latérale 27B, à une extrémité du logement 25, et le flasque 32A étant adapté pour coopérer indirectement avec la face latérale 27A, à l'autre extrémité du logement 25, comme cela sera décrit plus loin.

Le coussinet 24 est adapté pour se positionner avec frottement dans le logement 25. Il est constitué par un cylindre qui présente une rainure diamétrale 34 adaptée pour recevoir l'axe d'articulation 22. La largeur de la rainure 34 correspond à la distance séparant les deux méplats 30 de l'axe d'articulation 22. La profondeur de la rainure 34, légèrement inférieure au diamètre du cylindre, correspond à la hauteur des deux méplats 30 de l'axe d'articulation 22. A une extrémité, le cylindre 24 est muni d'un flasque de butée 36 adapté pour buter contre la face latérale 27A du palier 20. La rainure 34 se prolonge à travers le flasque 36.

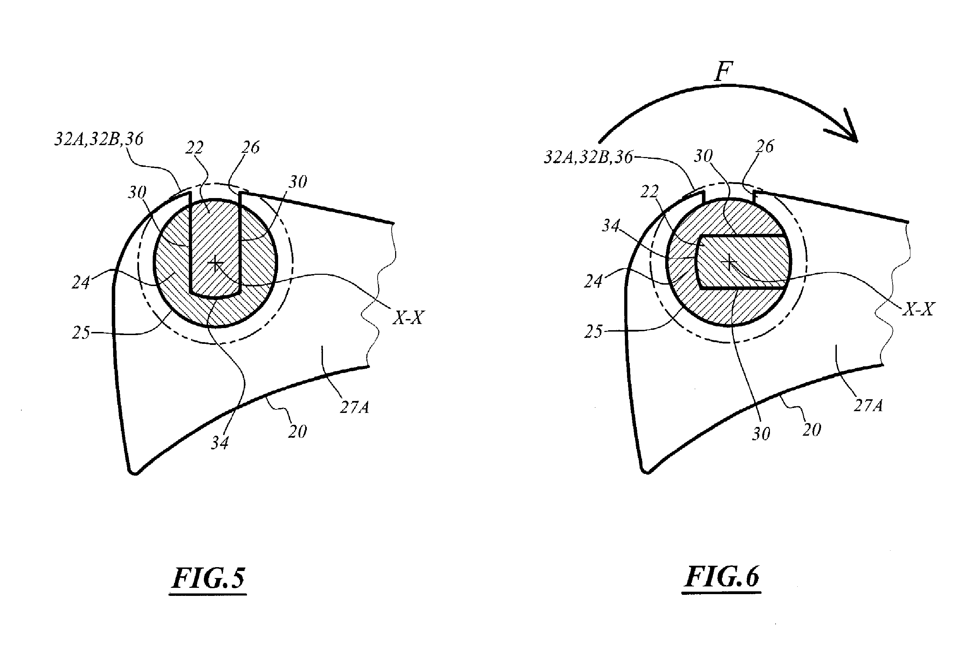

Comme indiqué en traits mixtes sur les Figures 5 et 6, les flasques 32A, 32B et 36 ont le même diamètre et sont coaxiaux lorsque l'axe 22 est inséré dans le coussinet 24.

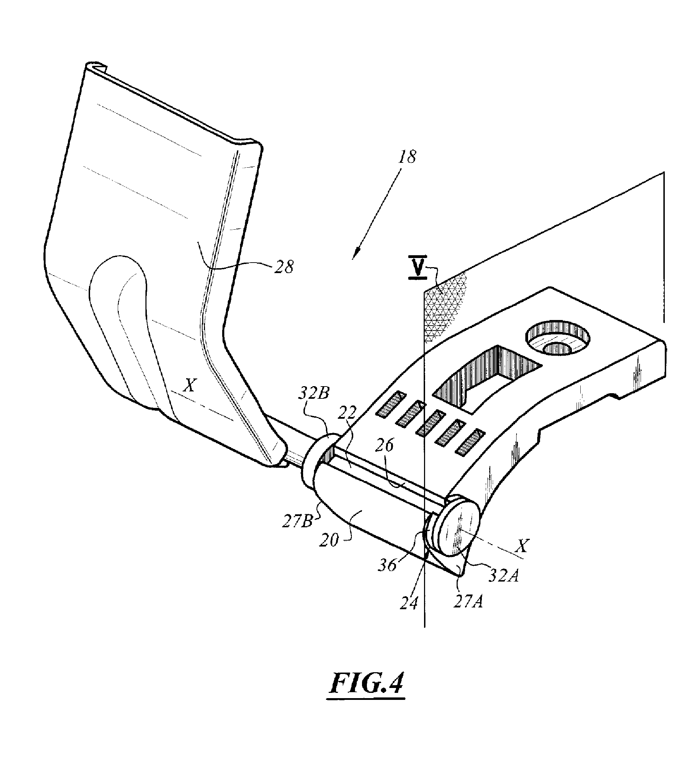

Comme l'indiquent les Figures 4 et 5, lors du montage de l'assise sur l'embase, le coussinet 24 est enfilé dans le logement 25 du palier 20 par l'une de ses extrémités et orienté de manière à ce que l'ouverture de la rainure 34 soit orientée de la même manière que la fente 26 du logement 25.

L'axe d'articulation 22, convenablement orienté, est ensuite inséré à travers la fente 26 dans la rainure 34. Les flasques de butée 32A, 32B empêchent alors l'axe 22 de coulisser longitudinalement par rapport au palier 20, le flasque 32B butant directement contre la face 27B, et le flasque 32A étant en appui contre le flasque 36. Ce dernier bute directement contre la face 27A. Cette insertion de l'axe 22 s'effectue sensiblement verticalement, ce qui correspond à la position relevée de l'assise du siège.

Par un simple mouvement de basculement de l'assise selon le sens de la flèche F sur la Figure 6, l'axe d'articulation 22 entraîne le coussinet 24 en rotation.

Une fois l'assise en position rabattue, l'axe d'articulation 22 est ainsi emprisonné dans le coussinet 24, lui-même emprisonné dans le palier 20.

Lors du démontage de l'assise, le basculement de l'assise dans le sens inverse de la flèche F permet à l'axe d'articulation 22 d'entraîner le coussinet 24 en rotation.

Le système se retrouve alors dans la position représentée sur la Figure 5, dans laquelle l'axe d'articulation 22 peut être extrait du coussinet 24 en soulevant l'assise vers le haut.

Le système de montage selon l'invention permet donc de monter et de démonter une assise arrière de véhicule automobile de façon très simple et sans outil, tout en conservant la cinématique de basculement de celle-ci de façon à augmenter le volume du coffre.

## Revendications

1. Système de montage amovible (18) d'un premier élément (14) sur un second élément (16), du type dans lequel le système de montage (18) permet le basculement du premier élément (14) par rapport au second élément (16), le système de montage (18) comprenant un palier (20) solidaire du second élément (16) et muni d'un logement (25) de forme cylindrique présentant le long d'une génératrice une fente (26), et un axe d'articulation (22) solidaire du premier élément (14) et muni de deux méplats (30) lui permettant de traverser ladite fente (26), **caractérisé en ce qu'**il comprend un coussinet (24) adapté pour se positionner dans ledit logement (25) et comportant un cylindre présentant une rainure diamétrale (34) adaptée pour recevoir l'axe d'articulation (22).

2. Système de montage (18) selon la revendication 1, **caractérisé en ce que** le coussinet (24) comprend un flasque de butée (36) adapté pour buter contre une face latérale (27A) dudit palier (20).

3. Système de montage (18) selon la revendication 2, **caractérisé en ce que** l'axe d'articulation (22) comprend un flasque de butée (32A) adapté pour coopérer avec le flasque (36) dudit coussinet (24), et un flasque de butée (32B) adapté pour buter contre une face latérale (27B) dudit palier (20) pour positionner longitudinalement l'axe d'articulation (22).

4. Système de montage (18) selon la revendication 3, **caractérisé en ce que** les flasques de butée (32A, 32B, 36) de l'axe d'articulation (22) et du coussinet (24) sont coaxiaux lorsque l'axe (22) est inséré dans le coussinet (24).

5. Système de montage (18) selon la revendication 4, **caractérisé en ce que** lesdits flasques de butée (32A, 32B, 36) ont le même diamètre.

6. Système de montage (18) selon l'une quelconque des revendications 1 à 5, **caractérisé en ce que** le palier (20) est rapporté sur le second élément (16).

7. Système de montage (18) selon l'une quelconque des revendications 1 à 6, **caractérisé en ce que** le premier élément (14) est une assise arrière de véhicule automobile et le second élément (16) est une embase solidaire du plancher dudit véhicule.

8. Système de montage (18) selon la revendication 7, **caractérisé en ce que** la fente (26) dudit logement (25) est ouverte vers le haut.

9. Système de montage (18) selon la revendication 7 ou 8, **caractérisé en ce que** l'assise (14) comporte un axe d'articulation (22) de chaque côté, chaque axe d'articulation (22) étant associé à un palier (20) solidaire du plancher du véhicule.

10. Véhicule automobile, **caractérisé en ce qu'**il comprend un système de montage (18) d'une assise arrière (14) selon l'une quelconque des revendications 1 à 9.
